# EUROPÄISCHE PATENTSCHRIFT

(11) **EP 1 990 304 B1**
(45) Veröffentlichungstag und Bekanntmachung des Hinweises auf die Patenterteilung: **17.08.2016**
(21) Anmeldenummer: 08006950.3
(22) Anmeldetag: 08.04.2008
(51) Int. Cl.: B65H 75/40, B65H 75/44, A01K 27/00, B65H 75/36

(54) **Lagerung für eine Seilrolle**
Bearing for a rope roll
Palier pour un rouleau de corde

(30) Priorität: 10.05.2007 DE 202007006648 U
(43) Veröffentlichungstag der Anmeldung: 12.11.2008
(73) Patentinhaber: Flexi-Bogdahn Technik GmbH & Co. KG, 22941 Bargteheide (DE)
(72) Erfinder: Bogdahn, Manfred, 22391 Hamburg (DE)
(74) Vertreter: Jaeschke, Rainer

(56) Entgegenhaltungen:
- EP-A1- 0 550 856
- GB-A- 994 143
- GB-A- 2 347 922
- US-A- 4 390 142
- US-A- 5 377 626
- US-A- 5 388 877

## Beschreibung

Die Erfindung betrifft eine Lagerung für eine Seilrolle, die auf einer Achse in einem Gehäuse drehbar angeordnet ist. Insbesondere betrifft die Erfindung eine Lagerung für eine Seilrolle einer mechanisch auf- und abwickelbaren Leine zum Führen von Tieren.

Eine solche Leine ist beispielsweise aus der EP 0 941 657 B1 oder aus der US 4,390,142 bekannt. Die Leine weist ein zweiteiliges Gehäuse auf, in dem eine Seilrolle auf einer Achse drehbar gelagert ist. Die Leine kann entgegen der Kraft einer Feder von der Seilrolle abgewickelt und aus dem Gehäuse herausgezogen werden. Aufgrund der so gespannten Feder wickelt sich die Leine selbsttätig auf die Seilrolle wieder auf. Die Leine kann als im Querschnitt in etwa rundes Seil oder als flacher Gurt ausgebildet sein. Es ist im folgenden überwiegende von einem Seil die Rede, ohne dass damit eine Beschränkung verbunden sein soll.

In der Regel ist die Anordnung so getroffen, dass ein Gehäuseteil die Achse aufweist, auf der die Seilrolle drehbar angeordnet ist. Nach dem Einlegen der Seilrolle auf die Achse wird das andere Gehäuseteil auf das erste Gehäuseteil aufgesetzt und mit diesem verbunden. Es wird ein geschlossenes Gehäuse mit einer Austrittsöffnung für die Leine gebildet. Die Seilrolle wird axial zwischen den beiden Gehäuseteilen geführt.

Für einen ruhigen Lauf ist es erforderlich, dass die Seilrolle mit relativ wenig Spiel zwischen den Gehäuseteilen gehalten ist. Die Seilrolle besteht häufig aus Polyamid, während das Gehäuse aus einem anderen Kunststoff besteht. Beim Gebrauch einer derartigen Leine ist es unvermeidbar, dass die Leine auch im nassen Zustand aufgewickelt wird. Dies führt zum Ausdehnen der Seilrolle, so dass sich die Seilrolle zwischen den Gehäuseteilen einklemmen kann. Die Federkraft reicht dann nicht immer aus, um die Leine einwandfrei und zügig aufzuwickeln. Es handelt sich hierbei in der Regel zwar nur um geringe Ausdehnungen, die jedoch aufgrund des geforderten geringen axialen Spiels der Seilrolle und deren axialen Breite ausreichen, den Lauf der Seilrolle zu behindern. Ein einwandfreier Lauf der Seilrolle insbesondere im nassen Zustand ist nicht mehr gewährleistet.

Der Erfindung liegt die Aufgabe zugrunde, eine Lagerung der eingangs geschilderten Art so auszubilden, dass ein einwandfreier Lauf auch bei durch Feuchtigkeit aufgequollener Seilrolle möglich ist.

Die Aufgabe wird durch eine Seilrolle gemäß dem Anspruch 1 gelöst. Hierdurch wird erreicht, dass bei gleichem Ausdehnungskoeffizienten der Seilrolle trotz der auftretenden Ausdehnung in axialer Richtung die absolute Ausdehnung gering bleibt. Tatsächlich dehnt sich nur der in den Spalt eingreifende Vorsprung relativ zum Gehäusematerial aus. Das absolute axiale Ausdehnungsmaß bleibt demnach gering. Hierdurch kann das axiale Spiel bei der Montage bei trockener Seilrolle gering gehalten werden, ohne dass die Gefahr besteht, dass bei feuchter Seilrolle eine Klemmung zwischen den Gehäuseteilen auftritt.

Der Vorsprung kann als einzelner oder mehrere radial in den Spalt eintauchende Nasen ausgebildet sein. Vorzugsweise ist der Vorsprung umlaufend ausgebildet ist. Insbesondere kann der Vorsprung als eine radial nach innen weisende Verlängerung eines seitlichen Flansches der Seilrolle ausgebildet sein. Ein solcher Vorsprung kann im Zuge der Herstellung der Seilrolle einfach hergestellt werden.

Der Spalt befindet sich im Bereich der Achse. Es kann vorgesehen werden, dass der umlaufende Spalt durch einen axialen Abstand zwischen einem Absatz der Achse und einem Gehäuseteil gebildet ist. Dadurch wird das Zusammensetzen der Leine erleichtert, da die Achse keine Hinterschneidung durch den Spalt aufweist. Vielmehr wird der Spalt zwischen dem Absatz der Achse und dem aufgesetzten Gehäuseteil gebildet.

Es ist günstig, wenn das Gehäuse ein Gehäuseoberteil und ein Gehäuseunterteil aufweist, wobei die Achse mit dem einen Gehäuseteil verbunden ist und in der montierten Lage in das andere Gehäuseteil eingreift und einen Absatz aufweist, dessen radiale Stirnfläche einen axialen Abstand zu dem anderen Gehäuseteil unter Bildung des umlaufenden Spaltes aufweist. Dadurch bleibt die Leine leicht zu montieren. Auch kann die Seilrolle leicht eingesetzt werden, da der nach innen weisende Vorsprung auf dem Absatz aufliegt und das dünnere Ende der Achse durch die verbleibende Öffnung der Seilrolle verläuft, um in das andere Gehäuseteil einzugreifen.

Weiterhin ist es zweckmäßig, wenn in der montierten Lage das axiale Maß des axialen Abstands zwischen Absatz und Gehäuseteil geringfügig größer ist als die axiale Breite zuzüglich der axialen Ausdehnung des Vorsprungs der Seilrolle. Dann wird ein einwandfreier Lauf der Seilrolle auch im nassen Zustand gewährleistet. Die maximale Ausdehnung ist materialabhängig und kann ermittelt werden.

Aus welchem Material die Seilrolle einerseits und das Gehäuse andererseits bestehen, ist grundsätzlich beliebig. Das Problem tritt insbesondere dann auf, wenn die Seilrolle und die Gehäuseteile unterschiedliche Ausdehnungskoeffizienten aufweisen. Die Seilrolle kann aus Polyamid bestehen. Das Gehäuse kann aus einem anderen Kunststoff hergestellt sein.

Es kann vorgesehen werden, dass die Achse Bestandteil des Gehäuseunterteils ist und mit ihrem freien Ende in eine Aufnahme des Gehäuseoberteils eintaucht. Das Gehäuseunterteil kann somit im Spritzgussverfahren hergestellt werden.

Günstig ist es weiterhin, wenn die Achse mit einer vorbestimmten Länge in die Aufnahme eintaucht und den axialen Abstand begrenzt. Insbesondere können die Länge der Achse oder die Tiefe der Aufnahme so bemessen sein, dass die freie Stirnfläche der Achse an die axiale Begrenzung der Aufnahme in axialer Richtung anschlägt. Der Spalt wird somit zwischen dem Absatz und der diesem zugekehrten inneren Begrenzung des Gehäuseteils gebildet. Die Eintauchtiefe der Achse in die Aufnahme wird weiterhin begrenzt, und es kann ein Spalt mit definierter axialer Breite in einfacher und reproduzierbarer Weise hergestellt werden. Auch werden die Funktionselemente bei der Herstellung mit ausgebildet, und ein Nacharbeiten ist nicht erforderlich. Der Spalt weist somit stets das gewünschte axiale Maß auf.

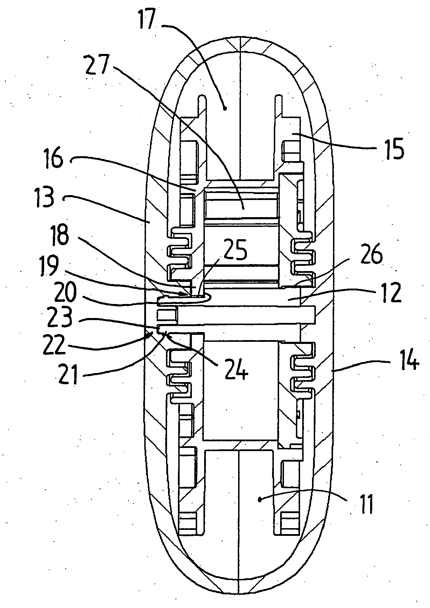

Die Erfindung wird im Folgenden anhand der schematischen Zeichnung näher erläutert. Die einzige Figur zeigt einen Querschnitt durch ein Leinengehäuse mit einer darin drehbar gelagerten Seilrolle.

Die in der Zeichnung gezeigt Leine kann als auf- und abwickelbare Leine zum Führen von Tieren ausgebildet sein. Es ist eine Seilrolle 11 vorhanden, die drehbar auf einer Achse 12 gelagert ist. Die Achse ist Bestandteil eines Gehäuseteils 14, das mit einem gegenüberliegenden anderen Gehäuseteil 13 ein geschlossenes Gehäuse für die

Seilrolle 11 bildet. Die Achse kann aber auch als separates Bauteil ausgebildet sein und beispielsweise mit einem Gehäuseteil verbunden sein.

Die Seilrolle weist zwei beabstandete seitliche Flansche 15, 16 auf, die zwischen sich einen Raum 17 für die aufzuwickelnde Leine bildet. Die Seilrolle 11 kann gegen die Kraft einer nicht näher gezeigten Feder 27 abrollbar und aufgrund der Federkraft wieder aufrollbar sein. Die Feder ist in der Regel als Spiralfeder ausgebildet. Die Seilrolle 11 besteht in der Regel aus Polyamid, während die Gehäuseteile 13, 14 aus einem anderen Kunststoff bestehen. Insoweit entspricht die gezeigte Leine einer bekannten Leine zum Führen von Tieren und bedarf keiner weiteren Erläuterung.

Die Seilrolle 11 wird radial auf der Achse 12 geführt. Im Einzelnen ist die Anordnung so getroffen, dass die Seilrolle sich mit der Nabe auf der feststehenden Achse 12 an wenigstens zwei axial beabstandeten Stellen 25, 26 abstützt. Durch diese radiale Lagerung der Seilrolle auf zwei axial beabstandeten Stellen der Achse 12 wird ein ruhiger Lauf der Seilrolle erreicht. Insbesondere wird ein Verkanten oder Schieflaufen der Seilrolle auf der Achse vermieden.

Für die axiale Führung weist die Seilrolle einen nach innen auf die Achse weisenden Vorsprung 18 auf, der in einem umlaufenden Spalt 19 verläuft. Im Einzelnen ist die Anordnung so getroffen, dass der Spalt zwischen einem Absatz 20 der Achse 12 und einem Gehäuseteil 13 gebildet wird. Die Achse 12 erstreckt sich bis in eine konzentrische Öffnung 22 des Gehäuseteils 13. Es sind an dem freien Ende 23 der Achse radiale Vorsprünge 21 vorhanden, die in eine korrespondierende Nut 24 in der Öffnung in dem Gehäuseteil 13 eingreifen. Hierdurch werden die Gehäuseteile 13, 14 axial miteinander verbunden.

Bei dem in der Zeichnung dargestellten Ausführungsbeispiel stützt sich die innere ringförmige Umfangsfläche des Vorsprungs 18 radial auf der Achse 12 ab und bildet somit das eine radiale Lager 25 für die Seilrolle 11. Das gegenüberliegende andere radiale Lager 26 wird durch den seitlichen Flansch 15 gebildet, dessen innere ringförmige Fläche sich ebenfalls auf der Achse 12 abstützt. An der feststehenden Achse 12 ist zudem eine Befestigung für die Rückholfeder 27 der Seilrolle 11 vorhanden, um eine Abwickeln entgegen der Federkraft und ein Aufwickeln aufgrund der gespannten Feder zu ermöglichen.

Weiterhin wird die Eintauchtiefe der Achse durch diese Vorsprünge begrenzt, so dass der Spalt ein definiertes axiales Maß erhält. Es kann auch vorgesehen werden, das die Tiefe der Öffnung 22 und die Länge des freien Endes der Achse so gewählt sind, dass die Stirnfläche der Achse an den Boden der Öffnung anschlägt. Auch dann kann ein definiertes axiales Maß des Spaltes erreicht werden.

Die Seilrolle stützt sich in radialer Richtung auf dem dickeren Abschnitt der Achse ab. In axialer Richtung stützt sich die Seilrolle in der montierten und in der Zeichnung gezeigten Lage mit dem Vorsprung 18 innerhalb des Spaltes 19 ab. Der Vorsprung kann umlaufend ausgebildet sein und sich mit seiner inneren Umfangsfläche auf dem dünneren Abschnitt der Achse abstützen. Hierdurch wird eine radiale Lagerung der Seilrolle auf der Achse bewirkt.

Die Montage der Leine erfolgt, indem auf die Achse 12 des Gehäuseunterteils 14 zunächst die Seilrolle 11 aufgesetzt wird. Dann liegt die Innenfläche des Vorsprungs 18 auf dem Absatz 20 der Achse auf. Eventuell vorhandene Federmechanismen sind dann bereits montiert, und das Seil befindet sich auf der Seilrolle oder ist dort verankert. Anschließend wird das Gehäuseoberteil 13 aufgesetzt. Die Leine wird aus einer Öffnung des Gehäuses herausgeführt. Das freie Ende der Achse rastet beim Zusammenfügen in der Öffnung 22 ein. Es können Schrauben oder weitere Rastelemente vorhanden sein, um die Gehäuseteile 13, 14 sicher zu verbinden.

In der so montierten Lage wird der Spalt zwischen dem Absatz 20 der Achse 12 und dem Gehäuseteil 13 gebildet. Der Spalt und der Vorsprung können mit einfachen Mitteln sehr genau gefertigt werden, so dass der Vorsprung in dem Spalt mit wenig Spiel gehalten werden kann. Ein sicherer und geräuscharmer Lauf der Seilrolle im Gehäuse wird erreicht.

## Patentansprüche

1. Lagerung für eine Seilrolle, die auf einer Achse in einem Gehäuse drehbar angeordnet ist, wobei die Seilrolle (11) einen in Richtung auf die Achse (12) weisenden Vorsprung (18) aufweist, der in einen umlaufenden Spalt (19) eingreift, um die Seilrolle axial auf der Achse zu führen, **dadurch gekennzeichnet, dass** der Spalt (19) durch einen axialen Abstand zwischen einem Absatz (20) der Achse (12) und einem Gehäuseteil (13) gebildet ist.

2. Lagerung nach Anspruch 1, **dadurch gekennzeichnet, dass** der Vorsprung (18) umlaufend ausgebildet ist.

3. Lagerung nach Anspruch 1 oder 2, **dadurch gekennzeichnet, dass** der Vorsprung (18) als eine radial nach innen weisende Verlängerung eines seitlichen Flansches (16) der Seilrolle ausgebildet ist.

4. Lagerung nach Anspruch 1, **dadurch gekennzeichnet, dass** das Gehäuse ein Gehäuseoberteil (13) und ein Gehäuseunterteil (14) aufweist, dass die Achse (12) mit dem Gehäuseunterteil (14) verbunden ist und in der montierten Lage in das Gehäuseoberteil (13) eingreift und einen Absatz (20) aufweist, dessen radiale Stirnfläche einen axialen Abstand zu dem Gehäuseoberteil (13) unter Bildung des umlaufenden Spaltes (19) aufweist.

5. Lagerung nach Anspruch 1 oder 4, **dadurch gekennzeichnet, dass** in der montierten Lage das axiale Maß des axialen Abstands zwischen Absatz (20) und zugewandten Gehäuseoberteil (13) geringfügig größer ist als die axiale Breite zuzüglich der axialen Ausdehnung des Vorsprungs (18) der Seilrolle.

6. Lagerung nach einem der Ansprüche 1 bis 5, **dadurch gekennzeichnet, dass** die Seilrolle (11) aus Polyamid besteht.

7. Lagerung nach einem der Ansprüche 1 bis 6, **dadurch gekennzeichnet, dass** das Gehäuse (13, 14) aus einem Kunststoff besteht.

8. Lagerung nach einem der Ansprüche 1 bis 7, **dadurch gekennzeichnet, dass** die Achse (12) Bestandteil des Gehäuseunterteils (14) ist und mit ihrem freien Ende (23) in eine Aufnahme (22) des Gehäuseoberteils (13) eintaucht.

9. Lagerung nach Anspruch 8, **dadurch gekennzeichnet, dass** die Achse (12) mit einer vorbestimmten Länge in die Aufnahme (22) eintaucht und das axiale Maß des gebildeten Spalts (19) begrenzt.

10. Lagerung nach einem der Ansprüche 1 bis 9, **dadurch gekennzeichnet, dass** das Gehäuse und die Seilrolle Bestandteile einer mechanisch auf- und abrollbaren Leine zum Führen von Tieren sind.

## Claims

1. Bearing for a rope roll which is arranged rotatably in a housing on an axis,
wherein
the rope roll (11) has a protrusion (18) pointing in the direction of the axis (12), said protrusion engaging with a circumferential gap (19) in order to guide the rope roll axially on the axis, **characterised in that** the gap (19) is formed by axial spacing between a recess (20) of the axis (12) and a housing part (13).

2. Bearing according to claim 1, **characterised in that** the protrusion (18) is formed to be circumferential.

3. Bearing according to claim 1 or 2, **characterised in that** the protrusion (18) is formed as an extension of a lateral flange (16) of the rope roll, said extension pointing radially inwards.

4. Bearing according to claim 1, **characterised in that** the housing has a housing upper part (13) and a housing lower part (14), the axis (12) is connected to the housing lower part (14) and, in the mounted position, engages with the housing upper part (13) and has a recess (20), the radial front surface of which has axial spacing with respect to the housing upper part (13) to form the circumferential gap (19).

5. Bearing according to claim 1 or 4, **characterised in that**, in the mounted position, the axial dimension of the axial spacing between the recess (20) and the facing housing upper part (13) is slightly larger than the axial width plus the axial extension of the protrusion (18) of the rope roll.

6. Bearing according to one of claims 1 to 5, **characterised in that** the rope roll (11) consists of polyamide.

7. Bearing according to one of claims 1 to 6, **characterised in that** the housing (13, 14) consists of a plastic.

8. Bearing according to one of claims 1 to 7, **characterised in that** the axis (12) is a component of the housing lower part (14) and dips into a receiver (22) of the housing upper part (13) with its free end (23).

9. Bearing according to claim 8, **characterised in that** the axis (12) dips into the receiver (22) with a predetermined length and limits the axial dimension of the gap (19) formed.

10. Bearing according to one of claims 1 to 9, **characterised in that** the housing and the rope roll are components of a mechanically rollable and unrollable leash for walking animals.

## Revendications

1. Dispositif de palier pour une poulie qui est montée mobile en rotation sur un axe dans un boîtier, cette poulie (11) comportant une saillie (18) dirigée vers l'axe (12) qui vient en prise dans une fente périphérique (19) pour guider axialement la poulie sur l'axe,
**caractérisé en ce que**
la fente (19) est formée par un écartement axial entre un talon (20) de l'axe (12) et une partie de boîtier (13).

2. Dispositif de palier conforme à la revendication 1,
**caractérisé en ce que**
la saillie (18) est une saillie périphérique.

3. Dispositif de palier conforme à la revendication 1 ou 2,
**caractérisé en ce que**
la saillie (18) est réalisée sous la forme d'un prolongement dirigé radialement vers l'intérieur d'une bride latérale (16) de la poulie.

4. Dispositif de palier conforme à la revendication 1,
**caractérisé en ce que**
le boîtier comprend une partie supérieure de boîtier (13) et une partie inférieure de boîtier (14), l'axe (12) est relié à la partie inférieure du boîtier (14) et, en position montée, vient en prise dans la partie supérieure (13) du boîtier, et comprend un talon (20) dont la surface frontale axiale est située à distance axiale de la partie supérieure du boîtier (13) en formant la fente périphérique (19).

5. Dispositif de palier conforme à la revendication 1 ou 4,
**caractérisé en ce que**
à l'état monté, la dimension axiale de la distance axiale entre le talon (20) et la partie supérieure du boîtier (13) tournée vers celui-ci est un peu supérieure à sa largeur axiale augmentée de l'étendue axiale de la saillie (18) de la poulie.

6. Dispositif de palier conforme à l'une des revendications 1 à 5,
**caractérisé en ce que**
la poulie (11) est en polyamide.

7. Dispositif de palier conforme à l'une des revendications 1 à 6,
**caractérisé en ce que**
le boîtier (13, 14) est en matériau synthétique.

8. Dispositif de palier conforme à l'une des revendications 1 à 7,
**caractérisé en ce que**
l'axe (12) fait partie de la partie inférieure (14) du boîtier et pénètre par son extrémité libre (23) dans un logement de réception (22) de la partie supérieure (13) du boîtier.

9. Dispositif de palier conforme à la revendication 8,
**caractérisé en ce que**
l'axe (12) pénètre par une longueur prédéfinie dans le logement de réception (22) et limite la dimension axiale de la fente (19) formée

10. Dispositif de palier conforme à l'une des revendications 1 à 9,
**caractérisé en ce que**
le boîtier et la poulie sont des éléments d'une laisse pouvant être enroulée et déroulée mécaniquement pour permettre de guider des animaux.
